# EUROPEAN PATENT APPLICATION

(11) **EP 1 435 322 A2**
(43) Date of publication of application: **07.07.2004**
(21) Application number: 03029275.9
(22) Date of filing: 22.12.2003
(51) Int. Cl.: B62D 55/14, B60B 3/06, B60B 3/00

(54) **Wheel particularly for tracked vehicles**

(30) Priority: 03.01.2003 IT BO20030005
(71) Applicant: ITALTRACTOR ITM S.P.A., 41014 Castelvetro (Prov. of Modena) (IT)
(72) Inventor: Sotgiu, Paolo, 41100 Modena (IT); Baranski, Filip, 44803 Bochum (DE); Tintrup, Frank, 44627 Herne (DE)
(74) Representative: Modiano, Guido, Dr.-Ing.

(57) **Abstract**

A wheel, particularly for tracked vehicles, comprising at least one flange (4) adapted to connect concentrically the hub (2) to the rim (3) and affected by a distribution of substantially radial ripples (11).

## Description

The present invention relates to a wheel particularly for tracked vehicles.

In the manufacture of traction elements for land vehicles, with particular reference to tracked vehicles, driving and track tensioning wheels for the actuation of tracks are known which are produced according to various manufacturing methods and accordingly have different structural characteristics.

Wheels are known, for example, which are constituted by a rim and a hub, to be keyed on a respective axle, and are mutually connected by one or two disks, which are flat and mutually parallel or set at an angle and are mutually welded. The wheels of tracked vehicles, in operating conditions, are subjected to considerable stresses that act in various directions but most of all to radial loads applied substantially along the edges of the rim, which constitute the surfaces for contact with the link of the track; accordingly, the wheels must have a considerable mechanical strength and sufficient fatigue strength, particularly in the regions where the loads are applied. The coupling of the hub, disks and rim by welding often is unable to provide the necessary assurances of structural solidity associated with low weight; moreover, manufacture by welding generally requires rather high costs and long times that as such are therefore increasingly less tolerable for large production volumes.

As an alternative to wheels manufactured by welding, wheels manufactured by casting have become widespread in the specific sector and are provided for example with a single disk for connection between the hub and the rim or with two disks that are flat and mutually parallel or set at an angle and are suitable to bear the loads applied to the edges of the rim. A wheel manufactured with a single central disk, arranged substantially on the centerline plane, often requires an excessive use of material in order to be able to achieve the necessary thickness suitable to provide acceptable strength; on the other hand, the manufacture of a wheel provided with two flat and parallel disks is constrained by the use, during casting, of a bulky and expensive core, and often forces the provision, on the surface of said disks, of a plurality of service holes to be closed subsequently by using additional material, requiring additional manufacturing steps.

The aim of the present invention is to obviate the above-cited drawbacks, by providing a wheel, particularly for tracked vehicles, that has high mechanical strength and solidity characteristics associated with a low weight.

Within this aim, an object of the present invention is to provide a wheel, particularly for tracked vehicles, that can be obtained by casting at a lower cost than known types of wheel in relatively short times by eliminating the core, accordingly with lower costs and by using traditional and substantially known manufacturing processes.

Another object of the present invention is to provide a wheel that is simple, relatively easy to provide in practice, safe in use, effective in operation, and has a relatively low cost.

This aim and these and other objects that will become better apparent hereinafter are achieved by the present wheel, particularly for tracked vehicles, characterized in that it comprises at least one flange that is suitable to connect concentrically the hub to the rim and is affected by a distribution of substantially radial ripples.

Further characteristics and advantages of the present invention will become better apparent from the following detailed description of a preferred but not exclusive embodiment of a wheel particularly for tracked vehicles according to the invention, illustrated by way of non-limiting example in the accompanying drawings, wherein:

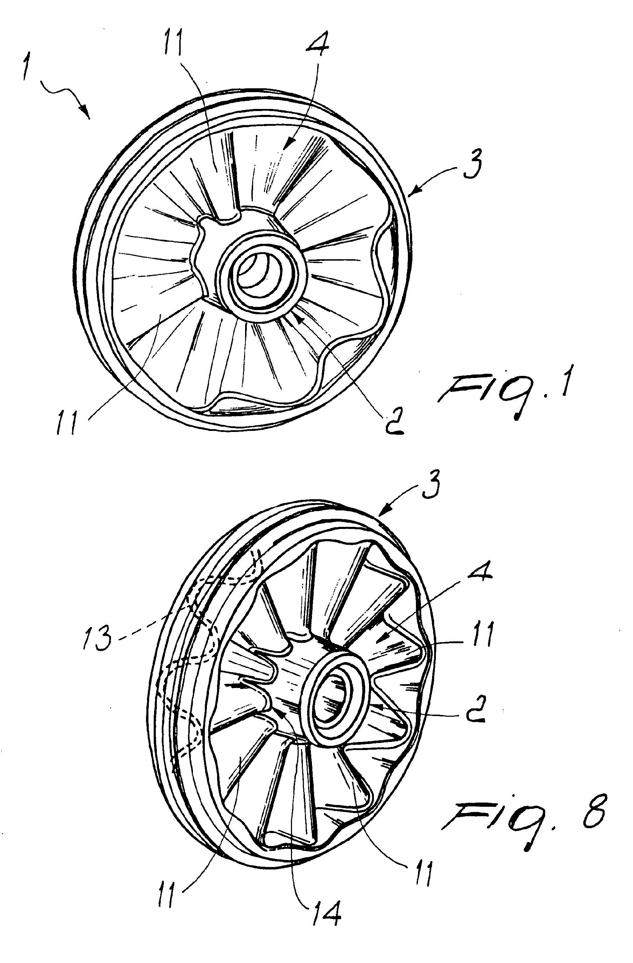

Figure 1 is a perspective view of the wheel according to the invention;
Figures 2, 3 and 4 are respective partially sectional perspective views of said wheel, taken substantially along planes that gradually approach the hub;
Figure 5 is a sectional view of the wheel according to the invention, taken along a diametrical plane;
Figure 6 is a schematic chart related to the projection onto a flat surface of the outer circumferential profile of the flange, substantially at the wheel rim;
Figure 7 is a schematic chart related to the projection onto a flat surface of the inner circumferential profile of the flange substantially at the wheel hub;
Figure 8 is a perspective view of an alternative embodiment of the wheel according to the invention.

In the embodiments that follow, individual characteristics, given in relation to specific examples, may actually be interchanged with other different characteristics that exist in other embodiments.

With reference to the figures, the reference numeral 1 generally designates a wheel particularly for tracked vehicles according to the invention.

The wheel is preferably provided by means of a casting process, for example an automated process, of the conventional type, and in the manner in which it is conceived it can be used in the production of traction elements for tracked vehicles both as a driving wheel and as a track tensioning wheel: said figures illustrate in particular a track tensioning wheel by way of example.

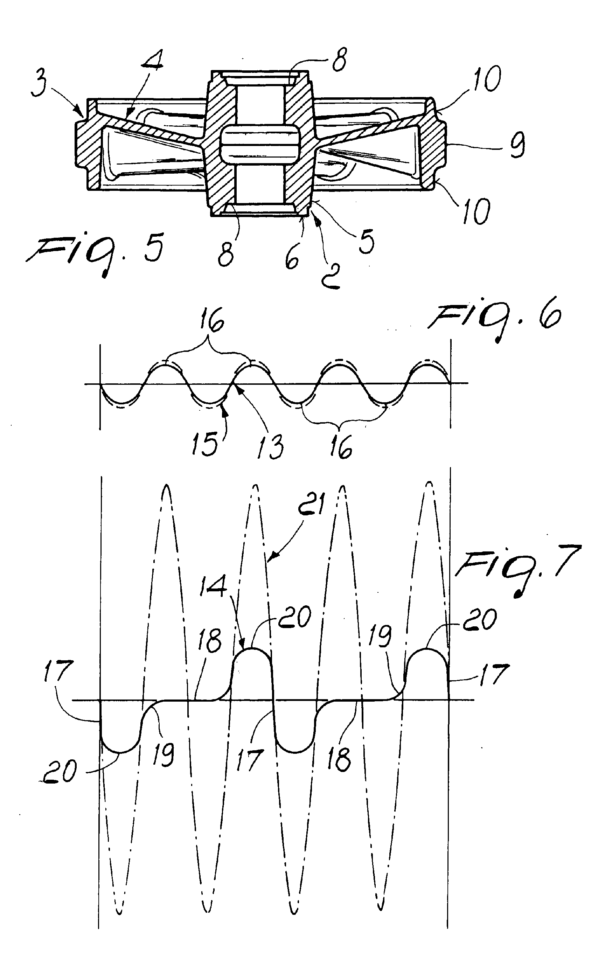

The wheel comprises a hub 2 and a rim 3, which are connected concentrically by a flange 4. The hub 2 is substantially tubular and its outer surface 5 tapers from its lateral faces 6 toward the centerline plane A; it is suitable for free keying on a corresponding axle or shaft of the tracked vehicle. One or more hollow grooves 7 are provided on the inner surface of the hub 2, and on the lateral faces 6 of the hub 2 there are respective shoulders 8 for fitting for example retention elements (see Figure 5 in particular).

The rim 3 has, along its outer surface, at least one sort of crest 9, which forms, at its sides, two annular surfaces 10 that are designed, when the tracked vehicle is assembled, to constitute an abutment for the internal surface of the link, keeping it at the correct tension and allowing its actuation.

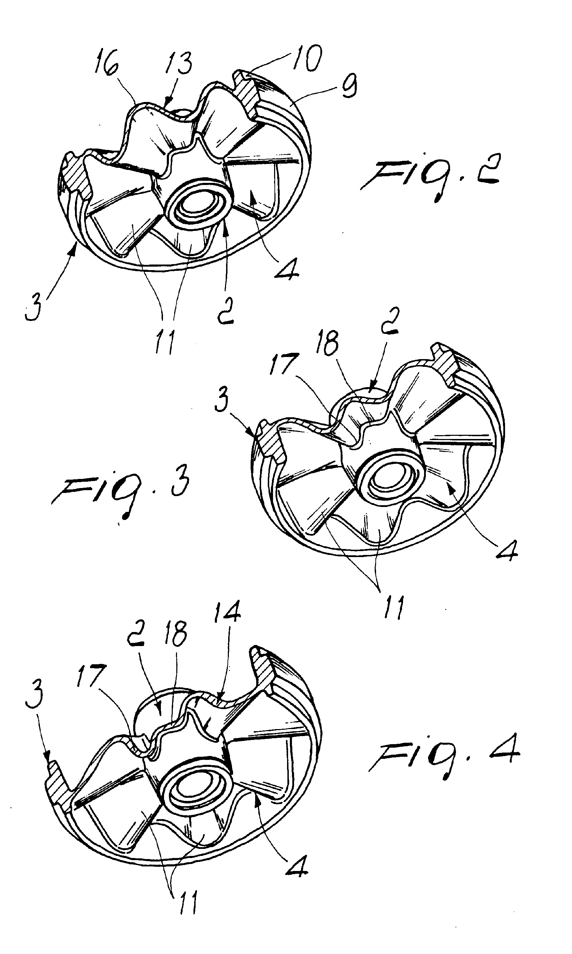

The flange 4 is preferably formed monolithically with the hub 2 and with the rim 3. According to the invention, the flange 4, which preferably but not necessarily has a uniform thickness, is affected by a distribution of substantially radial ripples 11. The ripples are distributed uniformly along the entire flange and are substantially undulated. The ripples 11 of the flange 4 are such as to form, at the annular band for connection between said flange and the rim 3 constituted by its inner surface 12, an undulated annular outer profile 13 that is closed in a loop (Figure 2). Likewise, the ripples 11 form, at the annular band for connection between the flange 4 and the hub 2 constituted by its outer surface 5, an undulated annular inner profile 14 that is closed in a loop and has a smaller amplitude (Figure 4). In the intermediate regions of the flange, the ripples 11 form a profile whose amplitude is variable in a radial direction and is consistent with the outer profile 13 and with the inner profile 14 (Figure 3).

The outer profile 13 is substantially sinusoidal and has a preset amplitude and wavelength; preferably, the total number of sinusoids of the flange 4, formed by the outer profile 13 and the inner profile 14, can vary from a minimum of two to a maximum of ten. A portion of the projection onto a flat surface of the outer profile 13 is shown schematically in Figure 6 in solid lines. The same figure illustrates the variation of the outer profile 13 with respect to a theoretical sinusoid 15 that has the same wavelength (shown in dot-and-dash lines). In particular, the outer profile 13 is rounded at the respective inflection points 16, so that in said points the amplitude is slightly decreased.

A portion of the projection onto a flat surface of the internal profile 14, shown schematically in detail in Figure 7 (in which the amplitudes are not shown to scale with respect to those of Figure 6), shows that it is substantially constituted by the combination of a plurality of substantially sinusoidal portions 17, all of which have the same preset wavelength and amplitude, spaced by substantially straight segments 18; the substantially sinusoidal portions 17 and the substantially straight segments 18 are consistent with the contour of the outer profile 13 and are mutually connected by respective connecting portions 19.

Each one of the sinusoidal portions 17 and of the straight segments 18 has a length, on the outer surface 5 of the hub 2, that is substantially equal to a wavelength of each one of the sinusoidal portions 17.

The substantially sinusoidal portions 17 have respective inflection points 20 that are broadly rounded, so that the amplitude thereof is reduced significantly; Figure 7 illustrates the variation of the inner profile 14 that can be actually detected on the outer surface 5 of the hub 2 (shown in solid lines) with respect to the corresponding theoretical sinusoid 21 (shown in dot-and-dash lines).

Since the load during operation is generally applied to the annular surfaces 10 of the rim 3, it is necessary to ensure in that region sufficient strength and rigidity, which can be provided by way of the substantially sinusoidal contour of the outer profile 13. The contour is chosen with a preferably rather large amplitude and a relatively short wavelength, so as to obtain closely spaced inflection points 16. In this manner one obtains at the rim 3 a sufficient total resisting cross-section of the flange 4.

The load that is transmitted during operation to the hub 2 in a substantially radial direction through the flange 4 is less critical than the load applied directly to the rim 3; accordingly, the amplitude of the sinusoidal portions 17 of the inner profile 14 is advantageously chosen smaller than the amplitude of the outer profile 13, so as to contain the weight of the flange 4 proximate to the hub 2. At the same time, the concentration of inflection points 20 on the outer surface 5 of the hub 2 also can be reduced, in view of the relatively reduced load: the insertion of the straight segments 18 alternated with the sinusoidal portions 17 allows to space appropriately the inflection points 20 from each other, accordingly containing the material used and the total weight.

It has thus been shown that the invention achieves the intended aim and objects.

Figure 8 illustrates an alternative embodiment of the wheel according to the invention. The wheel shown has a flange 4, which forms, at the outer surface 5 of the hub 2, an inner profile 14 that has a substantially sinusoidal shape that is consistent with the outer profile 13 at the inner surface 12 of the rim 3; the inner profile 14 also has a significantly reduced amplitude with respect to the outer profile 13, and has rounded inflection points 20 so as to differ from the theoretical sinusoid.

It is noted that the diameter of the wheel and the thicknesses involved may be greatly variable; the wheel can be made of different kinds of materials and with production processes that are alternative to casting and are suitable to obtain a similar technical result.

The invention thus conceived is susceptible of numerous modifications and variations, all of which are within the scope of the appended claims.

All the details may further be replaced with other technically equivalent ones.

In practice, the materials used, as well as the shapes and dimensions, may be any according to requirements without thereby abandoning the scope of the protection of the appended claims.

The disclosures in Italian Patent Application No. BO2003A000005 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A wheel, particularly for tracked vehicles, **characterized in that** it comprises at least one flange (4) that is suitable to connect concentrically the hub (2) to the rim (3) and is affected by a distribution of substantially radial ripples (11).

2. The wheel according to claim 1, **characterized in that** said ripples (11) of said flange (4) are substantially wave-like and are distributed uniformly along said flange (4).

3. The wheel according to claims 1 and 2, **characterized in that** said ripples (11) of said flange (4) form, at said rim (3), an outer undulated annular profile (13) that is closed in a loop and, at said hub (2), an inner undulated annular profile (14) that is closed in a loop and has a smaller amplitude.

4. The wheel according to one or more of the preceding claims, **characterized in that** said outer profile (13) has a substantially sinusoidal shape, with preset wavelength and amplitude, such as to ensure the necessary mechanical strength at said rim (3).

5. The wheel according to one or more of the preceding claims, **characterized in that** said inner profile (14) is constituted by the combination of a plurality of substantially sinusoidal portions (17) that are spaced by substantially straight segments (18), so as to appropriately space from each other the inflection points (20) of said sinusoidal portions (17), accordingly containing the weight of said flange (4) proximate to said hub (2).

6. The wheel according to one or more of the preceding claims, **characterized in that** each one of said sinusoidal portions (17) and each one of said straight segments (18) covers substantially one wavelength.

7. The wheel according to one or more of the preceding claims, **characterized in that** said sinusoidal portions (17) and said straight segments (18) are mutually connected by respective connecting portions (19).

8. The wheel according to one or more of the preceding claims, **characterized in that** said substantially sinusoidal outer profile (13) is rounded at respective inflection points (16) so as to reduce the amplitude of said outer profile (13) in said points (16).

9. The wheel according to one or more of the preceding claims, **characterized in that** said substantially sinusoidal portions (17) of said inner profile (14) are rounded at said inflection points (20), so as to decrease the amplitude of said inner profile (14) in said points (20).

10. The wheel according to one or more of the preceding claims, **characterized in that** said flange (4) has a substantially uniform thickness from said rim (3) to said hub (2).
